# EUROPÄISCHE PATENTANMELDUNG

(11) **EP 0 872 929 A2**
(43) Veröffentlichungstag der Anmeldung: **21.10.1998**
(21) Anmeldenummer: 98107006.3
(22) Anmeldetag: 16.04.1998
(51) Int. Cl.: H02B 1/00

(54) **Niederspannungs-Schaltfeldeinrichtung zur Verteilung elektrischer Energie auf mehrere Drehstromverbraucher**

(30) Priorität: 18.04.1997 DE 29707029 U
(71) Anmelder: Humboldt-Lotz Elektrotechnik GmbH, 50933 Köln (DE)
(72) Erfinder: Wittmann, Heinz Richard, D-51067, Köln (DE)
(74) Vertreter: Christl, Hermann, Dipl.-Ing.

(57) **Zusammenfassung**

Um zur Verteilung elektrischer Energie auf mehrere Drehstromverbraucher eine montagefreundliche Niederspannungs-Schaltfeldeinrichtung mit mehreren Sicherungs-Schaltleisten zu schaffen, bei deren Montage Betriebsunterbrechungen möglichst kurz sind und bei der während des laufenden Produktionsbetriebes die Zahl der zugeschalteten Sicherungsschaltleisten variiert werden kann, ohne daß dabei die Sammelschiene spannungsfrei geschaltet werden muß, wird erfindungsgemäß vorgeschlagen, daß die Niederspannungs-Schaltfeldeinrichtung nicht aus einem einteiligen Schaltschrank besteht, sondern daß sie in Modulbauweise im wesentlichen aus drei Modulen zusammensetzbar ist, nämlich einem zentralen, mit seiner Oberseite an die Sammelschiene (11) angeschlossenen Schienenträgergerüst als Mitteilteil (10), an dessen beide sich gegenüberliegende Seiten spiegelbildlich zueinander je ein Frontteil (14, 15) anbaubar ist, wobei in den Frontteilen (14, 15) jeweils mehrere Sicherungs-Schaltleisten (16 bis 20) mit rückseitigen elektrischen Kontakten angeordnet sind, mit denen die Frontteile mit dem Mittelteil elektrisch verbindbar sind.

## Beschreibung

Die Erfindung betrifft eine Niederspannungs-Schaltfeldeinrichtung mit mehreren Sicherungslastschaltleisten zur Verteilung elektrischer Energie auf mehrere Drehstromverbraucher.

In Produktionsstätten mit vielen Drehstromverbrauchern, insbesondere in Fabriken mit Produktionsstraßen wie z. B. in der Automobilindustrie dienen Niederspannungs-Schaltfeldeinrichtungen zur Verteilung der elektrischen Energie von der Stromversorgungs-Sammelschiene auf die verschiedenen Stromverbraucher wie z. B. Werkzeugmaschinen, Roboter etc.. Solche Niederspannungs-Schaltfeldeinrichtungen bestehen bisher aus einem einteiligen Schaltschrank, der einerseits an die Sammelschiene angeschlossen ist und der andererseits mehrere Sicherungslastschaltleisten trägt mit jeweils drei Stromabgängen zu den einzelnen Drehstromverbrauchern. Bei der Schaltschrankmontage mußte die Sammelschiene so lange spannungsfrei geschaltet werden, bis alle Sicherungs-Schaltleisten eingebaut sind. Im Störungsfall, z. B. im Fall eines Kurzschlusses in einer oder mehrerer der Sicherungs-Schaltleisteneinheiten mußte bisher die Sammelschiene ebenfalls spannungsfrei geschaltet werden. Das Spannungsfrei-Schalten der Stromversorgungs-Sammelschiene hat aber in der Regel einen Stillstand der Produktion in der Produktionsstätte zur Folge. Außerdem ist bei der einteiligen Schaltschrankbauweise der Zugang zur elektrischen Verbindung mit der Sammelschiene nicht sehr montagefreundlich.

Der Erfindung liegt daher die Aufgabe zugrunde, eine montagefreundliche Niederspannungs-Schaltfeldeinrichtung zu schaffen, bei deren Montage Betriebsunterbrechungen möglichst kurz sind und bei der während des laufenden Produktionsbetriebes die Zahl der zugeschalteten Sicherungs-Schaltleisten variiert werden kann, ohne daß dabei die Sammelschiene spannungsfrei geschaltet werden muß.

Diese Aufgabe wird gemäß der Erfindung mit den Maßnahmen des Kennzeichnungsteils des Anspruchs 1 gelöst. Eine vorteilhafte Ausgestaltung ist im Unteranspruch angegeben.

Charakteristisch für die erfindungsgemäße Niederspannungs-Schaltfeldeinrichtung ist, daß sie nicht aus einem einteiligen Schaltschrank besteht, sondern daß sie in Modulbauweise im wesentlichen aus drei Modulen zusammensetzbar ist, nämlich einem zentralen, mit seiner Oberseite an die Stromversorgungs-Sammelschiene angeschlossenen Schienenträgergerüst als Mittelteil, an dessen beide sich gegenüberliegende Seiten spiegelbildlich zueinander je ein Frontteil anbaubar ist. Die mit den Stromabgängen zu den Verbrauchern verbindbaren Sicherungs-Schaltleisten sind nicht im Mittelteil angeordnet, sondern in die Frontteile eingeschoben. Diese Sicherungs-Schaltleisten weisen rückseitige elektrische Kontakte auf, mit denen sie mit dem Mittelteil elektrisch verbindbar sind. Bei der Montage der erfindungsgemäßen Niederspannungs-Schaltfeldeinrichtung muß also die Sammelschiene nur für die kurze Zeit spannungsfrei geschaltet werden, die benötigt wird, um das Mittelteil an die Spannungsschiene anzuschließen. Sofort danach kann die Betriebsunterbrechung wieder aufgehoben werden und an das Mittelteil können die Frontteile sowie die eingeschobenen Sicherungs-Schaltleisten angebaut werden, während die Sammelschiene wieder unter Last ist.

Nach einem weiteren Merkmal der Erfindung können die elektrischen Kontakte der Sicherungs-Schaltleisten zum Mittelteil aus Lyra-Kontakten bestehen, die in eingeschobener Stellung der Sicherungs-Schaltleisten mit entsprechenden Kontakten des an die Sammelschiene angeschlossenen Mittelteils verbunden sind.

Die Erfindung und deren weitere Merkmale und Vorteile werden anhand der in den Figuren schematisch dargestellten Ausführungsbeispiele näher erläutert.

Es zeigt:
- Fig. 1:: in Seitenansicht die erfindungsgemäß aus drei Modulen zusammensetzbare Niederspannungs-Schaltfeldeinrichtung mit mehreren integrierten Sicherungslastschaltleisten, und
- Fig. 2:: die Ansicht von rechts auf die Vorderseite des rechten Frontteils der Schalteinrichtung der Fig. 1.

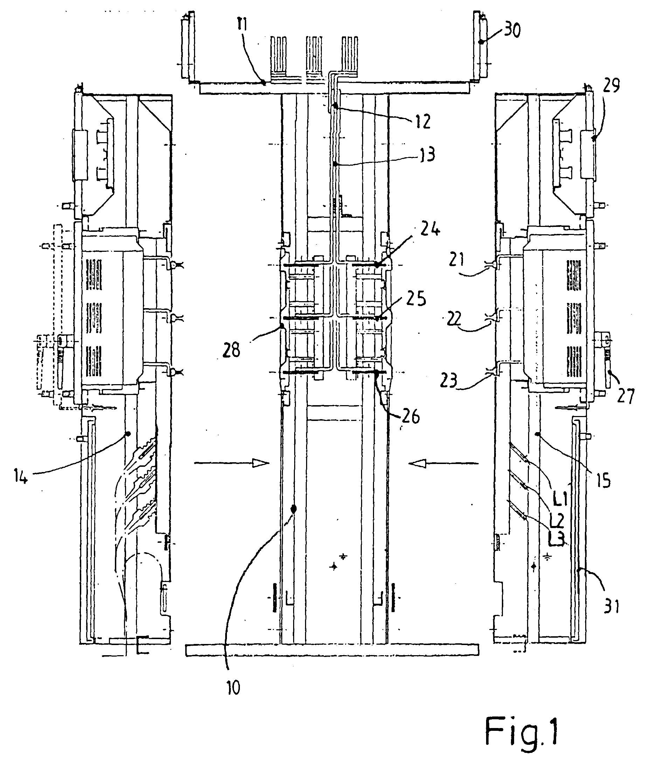

Nach Fig. 1 steht auf dem Boden z. B. einer Produktionshalle die Niederspannungs-Schaltfeldeinrichtung mit einem Mittelteil 10, das als Schienenträgergerüst an seiner Oberseite eine Stromversorgungs-Sammelschiene 11 trägt, deren Stromschienen über eine Verbindung 12 mit dem Stromzuführungssystem 13 des Mittelteils zu verbinden sind. Die Sammelschiene 11 muß nur so lange spannungsfrei geschaltet werden, bis die Verbindung 12 zwischen Sammelschiene und Mittelteil 10 in vergleichsweise kurzer Zeit montiert ist. Danach kann die Spannungsfrei-Schaltung der Sammelschiene 11 wieder aufgehoben werden, um eine möglicherweise eingetretene Betriebsunterbrechung in der Produktionshalle möglichst kurz zu halten.

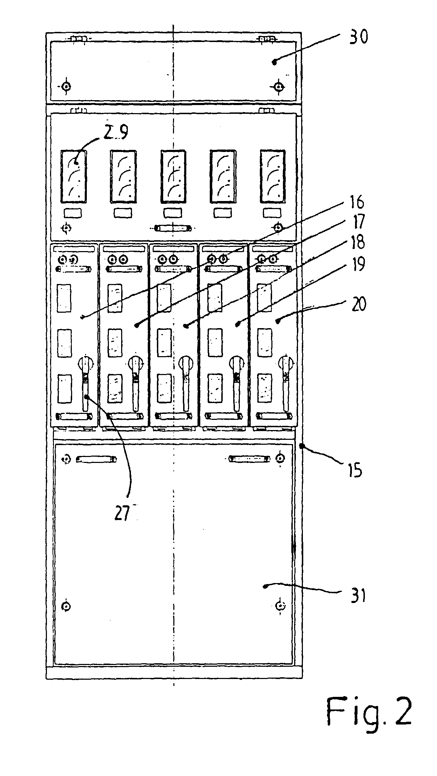

Danach werden an das zentrale Mittelteil 10 an beiden sich gegenüberliegenden Seiten spiegelbildlich zueinander in Modulbauweise je ein Frontteil 14, 15 angebaut, wobei diese Frontteile 14, 15 in Fig. 1 in der vom Mittelteil 10 noch getrennten Stellung gezeigt sind. Aus der Ansicht der Fig. 2 auf das Frontteil 15 geht hervor, daß in dieses fünf nebeneinanderliegende Sicherungs-Schaltleisten 16 bis 20 eingeschoben sind. Spiegelbildlich dazu können im anderen Frontteil 14 ebenfalls z. B. fünf Sicherungs-Schaltleisten angeordnet sein. Die Sicherungs-Schaltleisten weisen rückseitig elektrische Kontakte auf, z. B. jeweils drei Lyra-Kontakte 21, 22, 23, die nach Anbau des Frontteils 15 und in eingeschobener Stellung der jeweiligen Sicherungs-Schaltleisten 16 bis 20 mit entsprechenden Kontakten 24, 25, 26 des Mittelteils 10 verbindbar sind.

Die Sicherungs-Schaltleisten 16 bis 20 stehen im unteren Teil des Frontteils 14 bzw. 15 jeweils mit drei Stromabgängen L1, L2 und L3 in Verbindung, die zu einem Drehstromverbraucher wie z. B. Antriebsmotor einer Werkzeugmaschine führen. Die Belegung der drei Stromabgänge L1 bis L3 mit entsprechenden Steckern ist in Fig. 1 beim linken Frontteil 14 zu sehen. An der Frontseite der Sicherungs-Schaltleisten 16 bis 20 ist jeweils ein Schalthebel 27 angeordnet, mit dem die einzelnen angeschlossenen Drehstromverbraucher zu schalten sind.

Nachdem die erfindungsgemäße Niederspannungs-Schaltfeldeinrichtung montiert ist, kann der über die Sammelschiene 11 herangeführte Strom mit 4000 A im zeichnerischen Ausführungsbeispiel auf z. B. zehn Verbraucher mit jeweils 630 A (400 V) verteilt werden. Sind nur wenig Verbraucher anzuschließen, kann die erfindungsgemäße Schaltfeldeinrichtung z. B. nur auf das eine Frontteil 15 ausgelegt werden, wobei dann das andere Frontteil 14 auf der Rückseite durch eine Blechverkleidung abgeschlossen werden kann. Umgekehrt ist die erfindungsgemäße Niederspannungs-Schaltfeldeinrichtung im Falle von Betriebserweiterungen in Stufen ausbaubar. Mit 28 ist eine Abdeckung angezeigt, die bei Nichtbenutzung der Kontakte 24, 25, 26 des Mittelteils 10 vor unbeabsichtigter Berührung schützt. Im oberen Teil der Frontteile 14, 15 ist jeweils an Amperemeter 29 zum Anzeigen der auf die jeweilige Sicherungs-Schaltleiste verteilten Stromstärke (z. B. 630 A) eingebaut. Mit 30 ist eine Blende vor dem Raum der Sammelschiene 11 angezeigt. Mit 31 sind Abdeckungen für die Kabelanschlüsse an die Stromabgänge L1, L2, L3 angezeigt.

Der obere Bereich der Frontteile 14, 15 mit den Meßinstrumenten 29 weist ein Luftleitblech zur Abschottung der Instrumente auf. Im Falle eines Kurzschlusses wird das sich bildende Gasgemisch mit den ionisierten Teilchen von dem Luftleitblech geleitet. Am Luftleitblech werden die ionisierten Teilchen entladen. Durch die Luftführung wird die erwärmte Luft vor den Sammelschienen 11 in den Anlagenraum geleitet. Diese Zwangsführung der Abluft verhindert ein zusätzliches Aufheizen der Sammelschiene 11 mit der Geräteabwärme. Auch die einzelnen Sicherungs-Schaltleisten 16 bis 20 sind jeweils durch eine Schottwand voneinander getrennt.

## Patentansprüche

1. Niederspannungs-Schaltfeldeinrichtung mit mehreren Sicherungs-Schaltleisten zur Verteilung elektrischer Energie auf mehrere Drehstromverbraucher, gekennzeichnet durch ein zentrales, mit seiner Oberseite an die Stromversorgungs-Sammelschiene (11) angeschlossenes Schienenträgergerüst als Mittelteil (10), an dessen beide sich gegenüberliegende Seiten spiegelbildlich zueinander in Modulbauweise je ein Frontteil (14, 15) anbaubar ist, wobei in den Frontteilen (14, 15) jeweils mehrere Sicherungs-Schaltleisten (16 bis 20) mit rückseitigen elektrischen Kontakten angeordnet sind, mit denen die Frontteile mit dem Mittelteil elektrisch verbindbar sind.

2. Schaltfeldeinrichtung nach Anspruch 1, dadurch gekennzeichnet, daß die elektrischen Kontakte der Sicherungs-Schaltleisten Lyra-Kontakte (21, 22, 23) sind, die in eingeschobener Stellung der Sicherungs-Schaltleisten (16 bis 20) mit entsprechenden Kontakten (24, 25, 26) des an die Sammelschiene (11) angeschlossenen Mittelteils (10) verbunden sind.
